# EUROPÄISCHE PATENTSCHRIFT

(11) **EP 1 997 583 B1**
(45) Veröffentlichungstag und Bekanntmachung des Hinweises auf die Patenterteilung: **22.04.2009**
(21) Anmeldenummer: 07010544.0
(22) Anmeldetag: 26.05.2007
(51) Int. Cl.: B23Q 1/76

(54) **Lünette**
Stationary support
Lunette

(43) Veröffentlichungstag der Anmeldung: 03.12.2008
(73) Patentinhaber: SMW-Autoblok Spannsysteme GmbH, 88074 Meckenbeuren (DE)
(72) Erfinder: Rehm, Fritz, Dipl.Ing., 88094 Oberteuringen (DE)
(74) Vertreter: Engelhardt, Guido

(56) Entgegenhaltungen:
- DE-A1- 3 544 961
- DE-A1- 19 950 706
- DE-U1- 20 012 710
- US-A- 3 535 963

## Beschreibung

Die Erfindung bezieht sich auf eine Lünette zum zentrischen Spannen von stangenförmigen Werkstücken kreisförmigen Durchmessers auf einer Drehmaschine mit drei in einer gemeinsamen Ebene angeordneten, mit Laufrollen versehenen Halteglieder, von denen die beiden äußeren Halteglieder um in einem Gehäuse gelagerte Gelenkbolzen verschwenkbar sind und das mittlere Halteglied relativ zum Werkstück geradlinig verstellbar ist, wobei über in das Gehäuse und den Haltegliedern eingearbeitete Kanäle dem Werkstück Kühl- oder Schmiermittel zuführbar ist, wie z.B. aus der DE-U-20012710 bekannt.

Bei Lünetten dieser Art strömt das Kühl- oder Schmiermittel dem mittleren Halteglied über einen in das Gehäuse oder einen Gehäusedeckel eingearbeiteten Kanal unmittelbar zu, indem dieser Kanal in eine ebenfalls in dem Gehäuse vorgesehenen langlochartige Ausnehmung mündet. Ein weiterer in das verschiebbare mittlere Halteglied eingearbeiteter Kanal ist hierbei an die Ausnehmung angeschlossen, die rundum durch eine in das Gehäuse oder den Gehäusedeckel eingelegte Dichtung abgedichtet ist.

Diese Zuführung des Kühl- und/oder Schmiermittels zu der Rolle des mittleren Haltegliedes bzw. das Werkstück hat sich zwar bewährt, durch die Verstellbewegungen des mittleren Haltegliedes kann jedoch die die Ausnehmung umgebende Dichtung bereits nach relativ kurzer Zeit beschädigt werden, so dass Kühl- oder Schmiermittel aus der Ausnehmung austritt und in das Innere des Lünettengehäuses gelangt. Dadurch wird nicht nur die Schmierung der verstellbaren Bauteile beeinträchtigt und deren Funktion gestört, sondern es kann sich auch Rost mitunter an den Steuerkurven bilden, so dass die geforderte hohe Einspanngenauigkeit der Lünette nicht mehr gegeben ist.

Aufgabe der Erfindung ist es daher, die Lünette der eingangs genannten Gattung derart weiterzubilden, dass eine leckagefreie Einbringung des Kühl- oder Schmiermittels in das mittlere Halteglied sichergestellt ist. Dichtungen sollen hierbei nicht durch bewegliche Bauteile belastet werden, vielmehr soll eine ständige flüssigkeitsdichte Verbindung zwischen einem ortsfesten Bauteil und einem verstellbaren Bauteil gegeben sein, so dass durch die Zufuhr des Kühl- oder Schmiermittels keine Funktionsstörungen der Lünette hervorgerufen werden, sondern eine lange Lebensdauer gewährleistet ist. Der Bauaufwand, mittels dem dies zu bewerkstelligen ist, soll gering gehalten werden, dennoch soll eine stets sichere Betriebsweise gegeben sein.

Gemäß der Erfindung wird dies bei einer Lünette der vorgenannten Art dadurch erreicht, dass zur leckagefreien Einbringung des Kühl- und/oder Schmiermittels in das mittlere Halteglied in das Gehäuse und/oder in einen Gehäusedeckel ein Freiraum eingearbeitet ist, dass die in dem Gehäuse und/oder dem Gehäusedeckel sowie dem mittleren Halteglied eingearbeiteten Kanäle an den Freiraum angeschlossen sind und dass die in den Freiraum mündenden Kanäle über ein elastisch verformbares Glied miteinander verbunden sind.

Der in dem Gehäuse bzw. dem Gehäusedeckel eingearbeitete in den Freiraum mündende Kanal kann hierbei etwa achssenkrecht oder achsparallel zu dem verstellbaren Halteglied in den Freiraum einmünden, wobei bei einem etwa senkrecht in den Freiraum einmündenden Kanal die Länge des elastisch verformbaren Gliedes geringfügig größer bemessen sein sollte als der maximale Abstand zwischen den beiden zu verbindenden Kanälen. Auch sollte der Kanal etwa in Höhe der Mitte des Verstellweges des mittleren Haltegliedes angeordnet sein. Bei einem etwa achsparallel verlaufenden, in das Gehäuse und/oder den Gehäusedeckel eingearbeiteten Kanal kann das elastische Glied mäanderförmig in den Freiraum eingelegt sein.

Der Freiraum sollte in seiner Querschnittsfläche etwa rechteckig ausgebildet sein und als elastisches Glied kann ein flexibler Hochdruckschlauch oder ein Balg vorgesehen werden.

Nach einer andersartigen Ausgestaltung ist es möglich, zur leckagefreien Einbringung des Kühl- oder Schmiermittels in das mittlere Halteglied in ein an diesem angebrachtes, vorzugsweise mit Steuerkurven versehenes Mittelstück der Lünette, ein achsparallel zu dem mittleren Halteglied gerichtetes starres Verbindungsglied, z.B. in Form eines Rohres, flüssigkeitsdicht an dem Mittelstück zu befestigen, das das Gehäuse oder einen Gehäusedeckel durchgreift und mit einem Ende mit dem in dem mittleren Halteglied eingearbeiteten Kanal und mit dem anderen Ende mit einem elastisch verformbaren Glied, z.B. einem Hochdruckschlauch oder Balg, verbunden ist. Hierbei sollte der Verstellbereich des elastisch verformbaren Gliedes zumindest dem Verstellweg des Verbindungsgliedes entsprechen.

Nach einer weiteren Ausführungsform kann zur leckagefreien Einbringung des Kühl- oder Schmiermittels in das mittlere Halteglied ein auf dieses einwirkendes als in einem Zylinder eingesetzter Kolben ausgebildetes Betätigungsglied mit einem vorzugsweise zentrischen Zuführungskanal versehen sein, der an den in dem mittleren Halteglied eingearbeiteten Kanal angeschlossen ist, und in die Stirnwand des Zylinders kann ein starres Zwischenglied, z.B. in Form eines Rohres eingesetzt sein, das teleskopartig und flüssigkeitsdicht in den Zuführungskanal verschiebbar eingreift.

Wird eine Lünette gemäß der Erfindung ausgebildet, so ist bei allen Ausführungsvarianten gewährleistet, dass bei der Zuführung von Kühl- oder Schmiermittel zu der in dem mittleren Halteglied angeordneten Rolle bzw. dem eingespannten Werkstück keine Leckage auftritt. Dadurch, dass die ortsfesten Anschlüsse für die Zuführung des Kühl- oder Schmiermittels flüssigkeitsdicht an den relativ zueinander verstellbaren Bauteilen angebracht und über ein elastisches Glied miteinander verbunden sind, ist sich sichergestellt, dass bei der Kühl- oder Schmiermittelübertragung dieses nicht austreten und in das Gehäuse der Lünette gelangen kann.

Durch in das Innere des Lünettengehäuses eindringendes Kühl- oder Schmiermittel bedingte Betriebsstörungen, insbesondere durch Rostablagerungen an den Steuerkurven des Mittelsstückes bedingte Einspannungenauigkeiten, werden somit zuverlässig vermieden, so dass die in dieser Weise ausgebildete Lünette über einen langen Zeitraum störungsfrei einsetzbar ist. Der Bauaufwand, der erforderlich ist, um eine leckagefreie Übertragung zu ermöglichen, ist sehr gering, da lediglich die beiden Anschlüsse, zum Beispiel über einen Schlauch oder einen Balg aneinander anzuschließen sind. Außerdem wird bei Unterbringung der Verbindungsglieder unmittelbar im Lünettengehäuse kein zusätzlicher Bauraum benötigt, auch sind vielfach keine Dichtungen erforderlich, so dass durch die vorschlagsgemäße Ausgestaltung das Betriebsverhalten von Lünettten in einem erheblichen Maße verbessert wird.

In der Zeichnung sind einige Ausführungsbeispiele der gemäß der Erfindung ausgebildeten Lünette dargestellt, die nachfolgend im einzelnen erläutert sind.

Hierbei zeigt, jeweils in Seitenansicht und teilweise im Schnitt:
- Figur 1: die Lünette mit einem als Schlauch ausgebildeten, an den beiden Kanälen befestigten Verbindungsglied zur Übertragung von Kühl- oder Schmiermittel, in geöffneter Betriebsstellung,
- Figur 2: die Lünette nach Figur 1, in geschlossener Betriebsstellung,
- Figur 3: einen Balg als Verbindungsglied bei der Lünette nach Figur 2,
- Figur 4: eine andersartige Anordnung des Verbindungsgliedes bei der Lünette nach Figur 1 und
- Figuren 5 und 6: andersartige Ausgestaltungen zur Übertragung des Kühl- oder Schmiermittels in das mittlere Halteglied der Lünette.

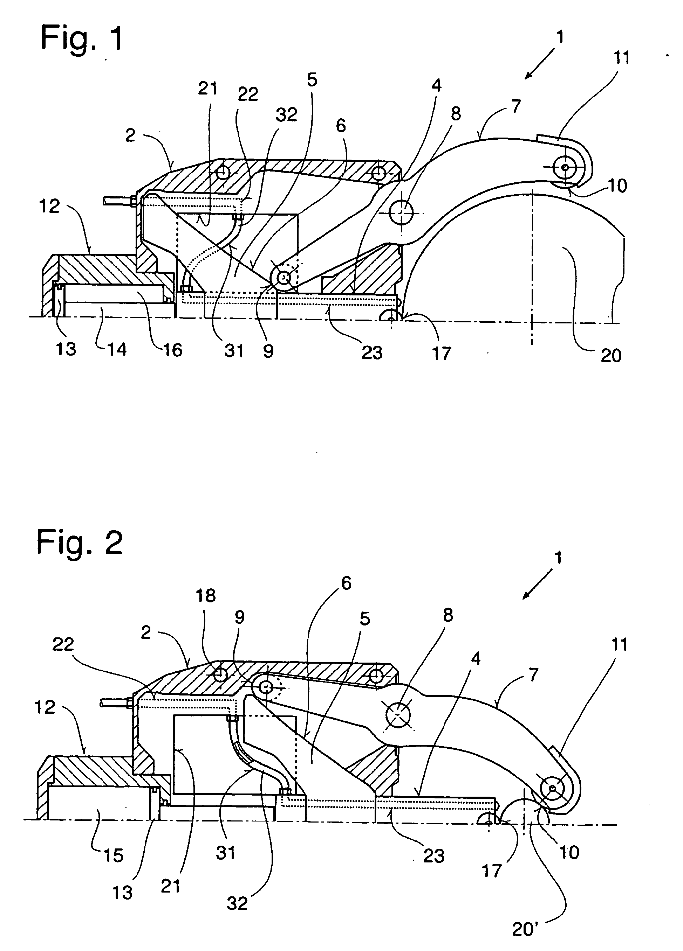

Die in den Figuren 1 bis 6 dargestellte und jeweils mit 1 bezeichnete Lünette dient zur zentrischen Spannung von stangenförmigen Werkstücken 20 bzw. 20' auf einer Drehmaschine mit drei in einer gemeinsamen Ebene angeordneten, mit Laufrollen 10 bzw. 17 versehenen Haltegliedern 4 bzw. 7. Die beiden äußeren Halteglieder 7 sind hierbei um in einem Gehäuse 2 gelagerten Gelenkbolzen 8 verschwenkbar, und das mittlere Halteglied 4 ist relativ zum Werkstück 20 bzw. 20' geradlinig verstellbar. Über in das Gehäuse 2 und die Halteglieder 4, 7 eingearbeitete Kanäle 22, 23 kann dem Werkstück 20 bzw. 20' Kühl- und/oder Schmiermittel zugeführt werden.

Zu Betätigung der Halteglieder 4 und 7 ist ein in einem Zylinder 12 eingesetzter, von Druckmittel beaufschlagbarer Kolben 13 vorgesehen, dessen Kolbenstange 14 mit dem mittleren Halteglied 4 fest verbunden ist. Außerdem ist auf dem mittleren Halteglied 4 ein Mittelstück 5 aufgesetzt, das beidseits jeweils mit einer Steuerkurve 6 versehen ist, an denen die äußeren Halteglieder 7 über Rollen 9 anliegen. Bei einer Verstellbewegung, in dem in den dem Kolben 13 zugeordneten Druckraum 15 Druckmittel zugeführt und somit das mittlere Halteglied 4 von der in Figur 1 gezeigten Betriebsstellung in die Betriebsstellung nach Figur 2 bewegt wird, werden die beiden äußeren Halteglieder 7 durch die Steuerkurven 6 nach innen geschwenkt. Durch die Steuerkurven 6 werden dabei die längeren durch die Schwenkbewegungen um die Gelenkbolzen 8 bedingten Verstellwege der äußeren Halteglieder 7 gegenüber dem mittleren Halteglied 4 ausgeglichen. Bei einer Druckmittelzuführung in den Druckraum 16 wird eine Rückführung der Halteglieder 4 und 7 bewerkstelligt.

Um den Laufrollen 10 und/oder 17 bzw. dem Werkstück 20 bzw. 20' Kühl- oder Schmiermittel zuführen zu können, sind die Halteglieder 4 und 7 sowie das Gehäuse 2, die Kanäle 22 bzw. 23 und weitere Kanäle eingearbeitet. Die in den äußeren Haltegliedern 7, die mit aufgesetzten Spritzschutzkappen 11 ausgestattet sind, vorgesehenen Kanäle sind jedoch nicht eingezeichnet.

Um eine leckagefreie Übertragung des Kühl- oder Schmiermittels von dem in dem Gehäuse 2 eingearbeiteten Kanal 22 in den in dem mittleren Halteglied 4 vorgesehenen Kanal 23 zu ermöglichen, ist das Gehäuse 2 mit einem Freiraum 21 versehen, an den die beiden Kanäle 22 und 23 angeschlossen sind. Und zur Verbindung des Kanals 22 mit dem Kanal 23 dient ein elastisch verformbares Glied 31, das als flexibler Hochdruckschlauch 32 ausgebildet ist. Durch das elastische Glied 31 wird somit der Verstellweg des mittleren Haltegliedes 4 ausgeglichen, es ist aber stets eine flüssigkeitsdichte Verbindung zwischen den beiden Kanälen 22 und 23 gegeben, so dass kein Kühl- oder Schmiermittel in das Innere des Gehäuses 2 gelangen kann.

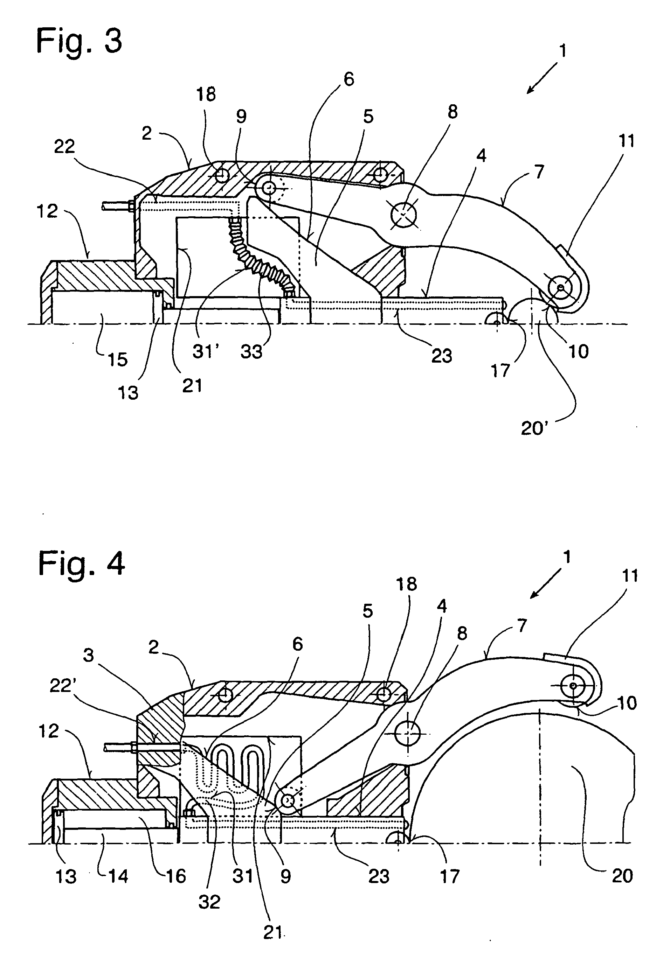

Bei der Ausgestaltung nach Figur 3 ist zur flüssigkeitsdichten Verbindung des Kanals 22, der etwa in der Mitte des Freiraumes 21 senkrecht zu dem mittleren Halteglied 24 in diesen mündet, als elastisch verformbares Glied 31' ein Balg 33 vorgesehen, durch den ebenfalls die Verstellbewegung des mittleren Haltegliedes 4 ausgeglichen werden.

Bei der Ausführungsvarianten nach Figur 4 ist der Kanal 22' in einen Deckel 3, der auf das Gehäuse 2 ausgesetzt und mittels in Gewindebohrungen 18 eingreifender Schrauben befestigt wird, eingearbeitet, und zwar etwa achsparallel zu der Verstellrichtung des mittleren Haltegliedes 4. Das elastisch verformbare Glied 31 besteht wiederum aus einem Schlauch 32, der jedoch mäanderförmig in den Freiraum 21 eingelegt ist, so dass dadurch die Verstellbewegungen des mittleren Haltegliedes 4 ausgeglichen werden.

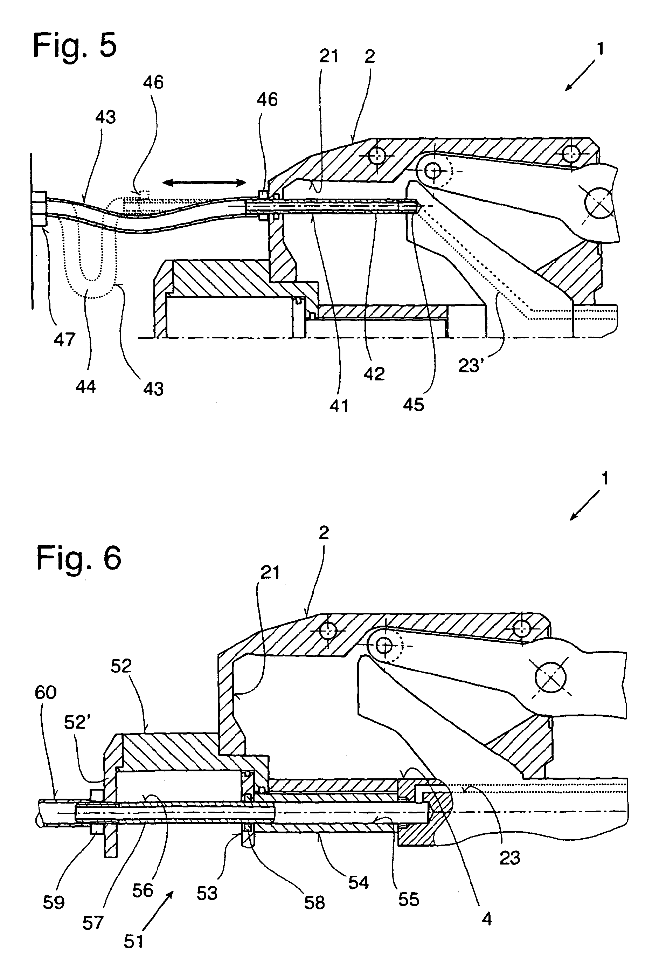

Gemäß Figur 5 ist als Verbindungsglied 41 ein starres Rohr 42 vorgesehen, das in eine in dem Mittelstück 5 vorgesehene Gewindebohrung 45 eingeschraubt ist. Das Rohr 42 durchgreift hierbei das Gehäuse 2 und ist über einen Anschlussnippel 46 mit einem elastischen Glied 43 verbunden. Das zwischen den beiden Anschlussnippeln 46 und 47 eingesetzte elastische Glied 43 ist als verformbarer Schlauch 44 ausgebildet, so dass durch diesen die Verstellbewegung des Rohres 2 eliminiert werden.

Bei der Ausführungsform nach Figur 6 wird dem in dem mittleren Halteglied 4 eingearbeiteten Kanal 23 das Kühl- oder Schmiermittel über das wiederum als in einen Zylinder 52 eingesetzten Kolben 53 ausgebildete Betätigungsglied 51 zugeführt. Die Kolbenstange 54 des beidseitig von Druckmittel beaufschlagbaren Kolbens 53 ist hierbei in das mittlere Halteglied 4 eingeschraubt, außerdem mit einem Zuführungskanal 55 versehen, in den ein an der Stirnwand 52' des Zylinders 52 befestigtes Zwischenglied 56, das durch ein starres Rohr 57 gebildet ist, eingreift. Durch eine in den Kolben 53 eingesetzte Dichtung 58 ist der Durchgang des Rohres 56 durch den Kolben 53 flüssigkeitsdicht verschlossen. Mittels eines Verschlussnippel 59 kann das Kühl- oder Schmiermittel aus einem an diesen angeschlossenen Schlauch 60 in dass Rohr 56 eingebracht werden.

Bei Verstellbewegungen des Kolbens 53 und des mit diesem fest verbundenen mittleren Haltegliedes 4 wird die Kolbenstange 54 auf dem starren Zwischenglied 56 verschoben, so dass stets eine flüssigkeitsdichte Verbindung zwischen dem Schlauch 60 und dem Zuführungskanal 55 gewährleistet ist.

## Patentansprüche

1. Lünette (1) zum zentrischen Spannen von stangenförmigen Werkstücken (20) kreisförmigen Durchmessers auf einer Drehmaschine mit drei in einer gemeinsamen Ebene angeordneten, mit Laufrollen versehenen Haltegliedern (4 bzw. 7), von denen die beiden äußeren Halteglieder (7) um in einem Gehäuse (2) gelagerten Gelenkbolzen (8) verschwenkbar sind und das mittlere Halteglied(4) relativ zum Werkstück (20 bzw. 20') geradlinig verstellbar ist, wobei über in das Gehäuse (2) und den Haltegliedern (4, 7) eingearbeitete Kanäle (22, 23) dem Werkstück (20) Kühl- oder Schmiermittel zuführbar ist,
**dadurch gekennzeichnet,**
**dass** zur leckagefreien Einbringung des Kühl- oder Schmiermittels in das mittlere Halteglied (4) in das Gehäuse (2) und/oder in einen Gehäusedeckel (3) ein Freiraum (21) eingearbeitet ist, dass die in dem Gehäuse (2) und/oder Gehäusedeckel (3) sowie dem mittleren Halteglied (4) eingearbeiteten Kanäle (22, 22', 23) an den Freiraum (21) angeschlossen sind und dass die in den Freiraum (21) mündenden Kanäle (22, 22', 23) über ein elastisch verformbares Glied (31, 31') miteinander verbunden sind.

2. Lünette nach Anspruch 1,
**dadurch gekennzeichnet,**
**dass** der in das Gehäuse (2) bzw. den Gehäusedeckel (3) eingearbeitete an den Freiraum (21) angeschlossene Kanal (22 bzw. 22') etwa achssenkrecht oder achsparallel zu dem verstellbaren Halteglied (4) in den Freiraum (21) einmündet.

3. Lünette nach Anspruch 2,
**dadurch gekennzeichnet,**
**dass** bei einem etwa senkrecht in den Freiraum (21) einmündenden Kanal (22) die Länge des elastisch verformbaren Gliedes (31) geringfügig größer bemessen ist als der maximale Abstand zwischen den beiden zu verbindenden Kanälen (22, 23).

4. Lünette nach Anspruch 2 oder 3,
**dadurch gekennzeichnet,**
**dass** der in den Freiraum (21) mündende, in das Gehäuse (2) und/oder den Gehäusedeckel (3) eingearbeitete Kanal (22) etwa in Höhe der Mitte des Verstellweges des mittleren Haltegliedes (7) angeordnet ist.

5. Lünette nach Anspruch 2,
**dadurch gekennzeichnet,**
**dass** bei einem etwa achsparallel verlaufenden, in das Gehäuse (2) und/oder den Gehäusedeckel (3) eingearbeiteten Kanal (22') das elastische Glied (31) mäanderförmig in den Freiraum (21) eingelegt ist.

6. Lünette nach Anspruch 1 bis 5,
**dadurch gekennzeichnet,**
**dass** der Freiraum (21) in seiner Querschnittsfläche etwa rechteckig ausgebildet ist.

7. Lünette nach Anspruch 1 bis 6,
**dadurch gekennzeichnet,**
**dass** als elastisches Glied (31) ein flexibler Hochdruckschlauch (32, 32') oder ein Balg (33) vorgesehen ist.

8. Lünette (1) zum zentrischen Spannen von stangenförmigen Werkstücken (20) kreisförmigen Durchmessers auf einer Drehmaschine mit drei in einer gemeinsamen Ebene angeordneten, mit Laufrollen versehenen Haltegliedern (4 bzw. 7), von denen die beiden äußeren Halteglieder (7) um in einem Gehäuse (2) gelagerte Gelenkbolzen (8) verschwenkbar sind und das mittlere Halteglied(4) relativ zum Werkstück (20) geradlinig verstellbar ist, wobei über in das Gehäuse (2) und den Haltegliedern (4, 7) eingearbeitete Kanäle (22, 23) dem Werkstück (20) Kühl- und/oder Schmiermittel zuführbar ist,
**dadurch gekennzeichnet,**
**dass** zur leckagefreien Einbringung des Kühl- und/oder Schmiermittels in das mittlere Halteglied (4) in ein an diesem angebrachtes, vorzugsweise mit einer Steuerkurve (6) versehenes Mittelstück (5) der Lünette (1) ein achsparallel zu dem mittleren Halteglied (4) gerichtetes starres Verbindungsglied (41), z.B. in Form eines Rohres (42), flüssigkeitsdicht an dem Mittelstück (5) befestigt ist, das das Gehäuse (2) oder einen Gehäusedeckel (3) durchgreift und mit einem Ende mit dem in dem mittleren Halteglied (4) eingearbeiteten Kanal (23') und mit dem anderen Ende mit einem elastisch verformbaren Glied (43), z.B. einem Hochdruckschlauch (44) oder Balg, verbunden ist.

9. Lünette nach Anspruch 8,
**dadurch gekennzeichnet,**
**dass** der Verstellbereich des elastisch verformbaren Gliedes (43) zumindest dem Verstellweg des mittleren Haltegliedes (4) entspricht.

10. Lünette (1) zum zentrischen Spannen von stangenförmigen Werkstücken (20) kreisförmigen Durchmessers auf einer Drehmaschine mit drei in einer gemeinsamen Ebene angeordneten, mit Laufrollen versehenen Haltegliedern (4 bzw. 7), von denen die beiden äußeren Halteglieder (7) um in einem Gehäuse (2) gelagerte Gelenkbolzen (8) verschwenkbar sind und das mittlere Halteglied(4) relativ zum Werkstück (20) geradlinig verstellbar ist, wobei über in das Gehäuse (2) und den Haltegliedern (4, 7) eingearbeitete Kanäle (22, 23) dem Werkstück (20) Kühl- oder Schmiermittel zuführbar ist,
**dadurch gekennzeichnet,**
**dass** zur leckagefreien Einbringung des Kühl- oder Schmiermittels in das mittlere Halteglied (4) ein auf dieses einwirkendes als in einem Zylinder (52) eingesetzter Kolben (53) ausgebildetes Betätigungsglied (51) mit einem vorzugsweise zentrisch angeordneten Zuführungskanal (55) versehen ist, der an den in dem mittleren Halteglied (4) eingearbeiteten Kanal (23) angeschlossen ist, und dass in die Stirnwand (52') des Zylinders (52) ein starres Zwischenglied (56), z.B. in Form eines Rohres (57) eingesetzt ist, das teleskopartig und flüssigkeitsdicht in den Zuführungskanal (55) verschiebbar eingreift.

11. Lünette nach Anspruch 10,
**dadurch gekennzeichnet,**
**dass** die frei Länge des in das Betätigungsglied (51) eingearbeiteten Zuführungskanals (55) zumindest der Länge des Verstellweges des mittleren Haltegliedes (4) entspricht.

## Claims

1. A stationary support (1) for central clamping of rod-shaped workpieces (20) with a circular diameter on a lathe with three holding elements (4 or 7) arranged in the same plane and provided with rollers, of which the two outer holding elements (7) can be swivelled about an articulated pin (8) mounted in a housing (2) and the middle holding element (4) can be adjusted in a straight line in relation to the workpiece (20 or 20'), with the ability to supply coolant or lubricant to the workpiece (20) by means of ducts (22, 23) worked into the housing (2) and the holding elements (4, 7),
**characterised in that,**
a leak-tight supply of coolant or lubricant into the middle holding element (4) is provided because a cavity (21) is worked into the housing (2) and/or a housing cover (3), that the ducts (22, 22', 23) worked into the housing (2) and/or the housing cover (3) as well as into the middle holding element (4) are connected to the cavity (21) and that the ducts (22, 22', 23) that open out into the cavity (21) are connected together by means of an elastically deformable element (31, 31').

2. The stationary support in accordance with Claim 1,
**characterised in that,**
the duct (22 or 22') worked into the housing (2) or the housing cover (3) and connected to the cavity (21) opens out into the cavity (21) approximately perpendicular or parallel to the axis of the adjustable holding element (4).

3. The stationary support in accordance with Claim 2,
**characterised in that,**
if a duct (22) emerges approximately at right angles into the cavity (21) then the length of the elastically deformable element (31) should be slightly greater than the maximum distance between the two ducts (22, 23) to be connected.

4. The stationary support in accordance with Claim 2 or 3,
**characterised in that,**
the duct (22) opening in the cavity (21) and worked into the housing (2) and/or the housing cover (3) is arranged approximately at the level of the middle of the adjustment travel of the middle holding element (7).

5. The stationary support in accordance with Claim 2,
**characterised in that,**
if a duct (22') worked into the housing (2) and/or the housing cover (3) runs approximately in parallel to the axis then the elastic element (31) can take a meandering path into the cavity (21).

6. The stationary support in accordance with Claims 1 to 5,
**characterised in that,**
the cross-sectional area of the cavity (21) is approximately rectangular.

7. The stationary support in accordance with Claims 1 to 6,
**characterised in that,**
a flexible high-pressure hose (32, 32') or a bellows (33) can be provided as the elastic element (31).

8. A stationary support (1) for central clamping of rod-shaped workpieces (20) with a circular diameter on a lathe with three holding elements (4 or 7) arranged in the same plane and provided with rollers, of which the two outer holding elements (7) can be swivelled about an articulated pin (8) mounted in a housing (2) and the middle holding element (4) can be adjusted in a straight line in relation to the workpiece (20), with the ability to supply coolant and/or lubricant to the workpiece (20) by means of ducts (22, 23) worked into the housing (2) and the holding elements (4, 7),
**characterised in that,**
in order to carry the coolant and/or lubricant into the middle holding element (4) without leaks, a middle piece (5) of the stationary support (1) attached to the middle holding element (4) and preferably provided with a control cam (6) has a rigid connection element (41), e.g. in the form of a tube (42), attached to it in a leak-tight connection, with the connection element (41) running in parallel to the axis of the middle holding element (4), passing through the housing (2) or a housing cover (3) and having one end connected to the duct (23') worked into the middle holding element (4) and its other end connected to an elastically deformable element (43), e.g. a high-pressure hose (44) or bellows.

9. The stationary support in accordance with Claim 8,
**characterised in that,**
the adjustment range of the elastically deformable element (43) at least corresponds to the adjustment travel of the middle holding element (4).

10. A stationary support (1) for central clamping of rod-shaped workpieces (20) with a circular diameter on a lathe with three holding elements (4 or 7) arranged in the same plane and provided with rollers, of which the two outer holding elements (7) can be swivelled about an articulated pin (8) mounted in a housing (2) and the middle holding element (4) can be adjusted in a straight line in relation to the workpiece (20), with the ability to supply coolant or lubricant to the workpiece (20) by means of ducts (22, 23) worked into the housing (2) and the holding elements (4, 7),
**characterised in that,**
in order to carry the coolant or lubricant into the middle holding element (4) without leaks, an actuator (51) is provided that acts on the middle holding element (4) and is formed as a piston (53) inserted in a cylinder (52) and has a preferably centrally arranged supply duct (55) that is connected to the duct (23) worked into the middle holding element (4), and a rigid intermediate element (56), e.g. in the form of a tube (57), is inserted into the end wall (52') of the cylinder (52) and engages in the supply duct (55) in a telescopic way providing a leak-tight connection.

11. The stationary support in accordance with Claim 10,
**characterised in that,**
the free length of the supply duct (55) worked into the actuator (51) at least corresponds to the length of the adjustment travel of the middle holding element (4).

## Revendications

1. Lunette (1) pour le serrage centré de barres à usiner (20) à section circulaire sur un tour équipé de trois éléments de retenue (4 ou 7) disposés dans un plan commun et munis de galets, dont les deux éléments de retenue extérieurs (7) se laissent pivoter autour de boulons articulés (8) logés dans un boîtier (2), dont l'élément de retenue central (4) se laisse déplacer en rectiligne par rapport à la pièce à usiner (20 ou 20'), et où la pièce à usiner (20) reçoit du liquide de refroidissement ou de lubrification par l'intermédiaire de canaux (22, 23) prévus dans le boîtier (2) et dans les éléments de retenue (4, 7),
**caractérisée en ce que**
pour amener le liquide de refroidissement ou de lubrification sans fuites dans l'élément de retenue central (4), il est pratiqué dans le boîtier (2) et/ou dans le couvercle (3) un espace libre (21), que les canaux (22, 22', 23) pratiqués dans le boîtier (2) et/ou dans couvercle (3) ainsi que dans l'élément de retenue central (4) communiquent avec l'espace libre (21) et que les canaux (22, 22', 23) débouchant dans l'espace libre (21) sont raccordés entre eux moyennant un élément élastique déformable (31, 31').

2. Lunette d'après la revendication 1,
**caractérisée en ce que**
le canal (22 ou 22') pratiqué dans le boîtier (2) ou dans le couvercle (3) et débouchant dans l'espace libre (21) atteint cet espace libre (21) à peu près perpendiculairement ou parallèle à l'axe de l'élément de retenue réglable (4).

3. Lunette d'après la revendication 2,
**caractérisée en ce que**
sur un canal (22) qui débouche à peu près perpendiculairement dans l'espace libre (21), la longueur de l'élément élastique déformable (31) est légèrement plus grande que l'écartement maxi entre les deux canaux (22, 23) à raccorder.

4. Lunette d'après les revendications 2 ou 3,
**caractérisée en ce que**
le canal (22) pratiqué dans le boîtier (2) et/ou dans le couvercle (3) et débouchant dans l'espace libre (21) est disposé à peu près au centre de la course de réglage de l'élément de retenue central (7).

5. Lunette d'après la revendication 2,
**caractérisée en ce que**
sur un canal (22') pratiqué dans le boîtier (2) et/ou dans le couvercle (3) et orienté à peu près parallèle à l'axe, l'élément élastique déformable (31) est disposé en méandres dans l'espace libre (21).

6. Lunette d'après les revendications 1 à 5,
**caractérisée en ce que**
la section transversale de l'espace libre (21) est à peu près rectangulaire.

7. Lunette d'après les revendications 1 à 6,
**caractérisée en ce que**,
en tant qu'élément élastique (31), il est prévu un tuyau flexible haute pression (32, 32') ou un soufflet (33).

8. Lunette (1) pour le serrage centré de barres à usiner (20) à section circulaire sur un tour équipé de trois éléments de retenue (4 ou 7) disposés dans un plan commun et munis de galets, dont les deux éléments de retenue extérieurs (7) se laissent pivoter autour de boulons articulés (8) logés dans un boîtier (2), dont l'élément de retenue central (4) se laisse déplacer en rectiligne par rapport à la pièce à usiner (20), et où la pièce à usiner (20) reçoit du liquide de refroidissement ou de lubrification par l'intermédiaire de canaux (22, 23) prévus dans le boîtier (2) et dans les éléments de retenue (4, 7),
**caractérisée en ce que**
pour amener le liquide de refroidissement ou de lubrification sans fuites dans l'élément de retenue central (4), il est prévu dans une pièce centrale (5) de la lunette (1) fixée sur celui-ci et munie de préférence d'une came de commande (6), un élément de raccordement (41) orienté parallèle à l'axe de l'élément de retenue central (4), p. ex. sous la forme d'un tuyau (42), qui est fixé étanche aux liquides sur la pièce centrale (5), qui passe à travers le boîtier (2) ou un couvercle (3) et dont une extrémité est raccordée au canal (23') pratiqué dans l'élément de retenue (4) et l'autre à un élément élastique déformable (43), tel que p.ex. un tuyau flexible haute pression (44).

9. Lunette d'après la revendication 8,
**caractérisée en ce que**
la course de réglage de l'élément élastique déformable (43) correspond au moins à la course de réglage de l'élément de retenue central (4).

10. Lunette (1) pour le serrage centré de barres à usiner (20) à section circulaire sur un tour équipé de trois éléments de retenue (4 ou 7) disposés dans un plan commun et munis de galets, dont les deux éléments de retenue extérieurs (7) se laissent pivoter autour de boulons articulés (8) logés dans un boîtier (2), dont l'élément de retenue central (4) se laisse déplacer en rectiligne par rapport à la pièce à usiner (20), et où la pièce à usiner (20) reçoit du liquide de refroidissement ou de lubrification par l'intermédiaire de canaux (22, 23) prévus dans le boîtier (2) et dans les éléments de retenue (4, 7),
**caractérisée en ce que**
pour amener le liquide de refroidissement ou de lubrification sans fuites dans l'élément de retenue central (4), il est prévu un élément d'actionnement (51) qui agit sur celui-ci et qui est conçu en tant que piston (53) inséré dans un cylindre (52), avec de préférence un canal d'amenée centré (55) raccordé au canal (23) pratiqué dans l'élément de retenue central (4), et que dans la paroi frontale (52') du cylindre (52), il est prévu un élément intermédiaire rigide (56), p. ex. sous la forme d'un tuyau (57), qui s'engrène de manière déplaçable, télescopique et étanche aux liquides dans le canal d'amenée (55).

11. Lunette d'après la revendication 10,
**caractérisée en ce que**
la longueur libre du canal d'amenée (55) pratiqué dans l'élément d'actionnement (51) correspond au moins à la longueur de la course de réglage de l'élément de retenue central (4).
